# EUROPEAN PATENT SPECIFICATION

(11) **EP 3 452 434 B1**
(45) Date of publication and mention of the grant of the patent: **27.09.2023**
(21) Application number: 17733525.4
(22) Date of filing: 08.05.2017
(51) Int. Cl.: C05D 9/00, C05G 3/00

(54) **METHOD FOR STIMULATING AND ENHANCING PROCESSES OF REDUCTION, TRANSFORMATION AND METABOLIZATION OF INORGANIC SALTS IN SURFACE SOILS, THROUGH TREATMENT WITH ENHANCED ROCK POWDER**
VERFAHREN ZUR STIMULIERUNG UND VERBESSERUNG VON PROZESSEN ZUR REDUZIERUNG, TRANSFORMATION UND METABOLISIERUNG ANORGANISCHER SALZE IN OBERFLÄCHENBÖDEN DURCH BEHANDLUNG MIT VERBESSERTEM STEINPULVER
PROCÉDÉ DE STIMULATION ET PROCESSUS OPTIMISANTS DE RÉDUCTION, DE TRANSFORMATION ET DE MÉTABOLISATION DES SELS INORGANIQUES PRÉSENTS DANS LES SOLS DE SURFACE, PAR TRAITEMENT AVEC UNE POUDRE DE ROCHE ACTIVÉE

(30) Priority: 06.05.2016 IT UA20163234
(43) Date of publication of application: 13.03.2019
(73) Proprietor: WIDDAR S.r.l., 33033 Codroipo (UD) (IT)
(72) Inventor: NASTATI, Enzo, 33033 Codroipo (UD) (IT)
(74) Representative: Borsano, Corrado
(86) International application number: PCT/IB2017/052662
(87) International publication number: WO 2017/191618

(56) References cited:
- DE-A1- 19 505 382
- Anonymous: "Biodynamic Preparation 500 - Cow Horn Manure", , 19 September 2008 (2008-09-19), XP055335778, Retrieved from the Internet: URL:http://www.biodynamics.in/BD500.htm [retrieved on 2017-01-16]
- Anonymous: "Biodynamic Preparation 501 Cow Horn Silica & Cow Horn Clay", , 29 September 2008 (2008-09-29), XP055335787, Retrieved from the Internet: URL:http://www.biodynamics.in/BD501.htm [retrieved on 2017-01-16]
- Silvia Giaretta: "3 di 3 - Formazione con Enzo Nastati 04 12 2014", , 11 December 2014 (2014-12-11), pages 1-2, XP054977078, Retrieved from the Internet: URL:https://www.youtube.com/watch?v=vHv9r_ 9iZww [retrieved on 2017-01-19]
- Silvia Giaretta: "2 di 3 - Formazione con Enzo Nastati 04 12 2014", , 12 December 2014 (2014-12-12), pages 1-2, XP054977079, Retrieved from the Internet: URL:https://www.youtube.com/watch?v=VBl_i- PSM5A [retrieved on 2017-01-19]
- Bacchus G. L.: "AN EVALUATION OF THE INFLUENCE OF BIODYNAMIC PRACTICES INCLUDING FOLIAR-APPLIED SILICA SPRAY ON NUTRIENT QUALITY OF ORGANIC AND CONVENTIONALLY FERTILISED LETTUCE (LACTUCA SATIVA L.)", JOURNAL OF ORGANIC SYSTEMS, vol. 5, no. 1, 30 December 2010 (2010-12-30), pages 1-37, XP055858547, ISSN: 1177-4258 Retrieved from the Internet: URL:http://www.organic-systems.org/journal /Vol_5(1)/pdf/JOS_Volume-5_Number-1.pdf#pa ge=4>

## Description

### Field of the invention

The present invention relates to a method for preparing a product adapted to stimulate and enhance processes of reduction, transformation and metabolization of inorganic salts in surface soils..

### Background art

It is generally recognized that no significant salification phenomena arise in a soil rich in organic substance. It is believed that this state of natural balance is due to the high metabolic capacity induced in the soil by the humidified organic substance, which results in the elimination of foreign and harmful matters and ingredients, such as inorganic salt compounds.

On the contrary, for those cases which suffer from the problem of the presence of inorganic salt compounds in the soil, soil "washing" systems have been developed and used for the purpose of washing away and removing the contained inorganic salt compounds. However, such systems have some important drawbacks: they cannot solve the problem at the root, since they only reduce the phenomenon temporarily or for a short period of time without inducing an effective long-term action; as a consequence, they require that the washing process be repeated over time and make it necessary to use huge and often unavailable amounts of soft water; as a consequence, they are only applicable in a few places and to very small areas.

Further details about some prior-art examples will be illustrated below.

It is known to remove the salts accumulated on the soil surface by using mechanical means. This method has achieved limited diffusion, although many farmers have used it because it is less problematical, for small surfaces, than the other methods available.

In addition, this method does not ensure "elimination" of the salts, which are simply transferred elsewhere. From an environmental viewpoint, therefore, this solution is neither useful nor sustainable.

It is also known to carry out a flushing or washing operation on the soil surface. This method is sometimes used in order to desalt soils with crusts of salt on their surface. Since the quantity of salt that can be removed from the soil is rather small, this method has not much practical significance, considering also that the water used must be "almost" demineralized due to osmotic requirements. In addition, this method finds limited application, in that it cannot be used in clayey soils that are not "permeable" to water. Moreover, this is a long-lasting process - taking months or years to complete - and requires huge amounts of water, just like leaching.

Leaching is a known method that is more effective in removing salts from soils than the other methods previously described. Leaching is effective when the drained salt water is conveyed through underground drainage systems that take the leached salts out of the area being reclaimed. It follows that this method is difficult or even impossible to use in large areas. Leaching must preferably occur when the humidity content of the soil is low and the water-bearing stratum is deep. The choice of this method is wholly dependent on the availability of huge amounts of water. Therefore, it is less effective in the summer months because of high scattering due to increased evaporation. Some countries (e.g. India) constitute an exception wherein leaching is more effective in the summer months because of the effect of the monsoon. It is also important to have a reliable estimate of the amount of water necessary to achieve salt leaching. The parameters that need to be taken into account and that determine the amount of water necessary for reclamation are the initial salt content in the soil, the desired level of salinity of the soil after leaching, the desired depth of reclamation, and the characteristics of the soil. As a general rule, 30 centimetres of soft water flowing through the soil will remove approx. 80% of the salts that are present in the first 30 cm of soil. In order to extend the effect to a depth of 60 cm, it will be necessary to have approx. 60 cm of water flow through the soil. It should be reminded that 60 cm over a surface of 1 m² correspond to 600 litres, and that water must remain there for months (just like a flood).

A method is also known wherein magnetized water is applied to salty soil. This will reduce the size of the salt crystals at twice the speed of non-magnetized water, thereby ensuring easier leaching (or solubilization) of the salt in the soil. The process must be continued for several months and is expensive as concerns the amount of water and the magnetization treatment, and also in environmental terms. Therefore, the adoption of this method depends on the costs incurred because of the reduced food production obtainable from salty soils. The most important benefit deriving from the use of magnetized water is better solubility of the smaller salt crystals, so that the plants can absorb an amount of salts contained in the soil which is 3-4 times greater than when using non-magnetized water, oxygen concentration being equal. The limits of the use of magnetized water are at least the following:
- very high costs and very long times (up to 1 or 2 years for "washing" 50 cm of soil);
- conditioning related to the essential filtering/chelating effect of plants, which is not guaranteed and cannot be predicted over time;
- it is a chemical-physical process that notoriously exposes soils to anomalies and/or disharmonies affecting the vital biologic system;
- limited effects not contributing to increasing the fertility of the soil.

The Internet page: Anonymous: "Biodynamic Preparation 500 - Cow Horn Manure", 19 September 2008, briefly describes a method of setting up a biodynamic preparation called "cornoletame" or "cow horn" or "500".

The Internet page: Anonymous: "Biodynamic Preparation 501 - Cow Horn Silica & Cow Horn Clay", 29 September 2008, and DE 195 05 382 A1 briefly describe a method of setting up a biodynamic preparation called "cornosilice" or "cow horn silica" or " 501 ". The article "AN EVALUATION OF THE INFLUENCE OF BIODYNAMIC PRACTICES INCLUDING FOLIAR-APPLIED SILICA SPRAY ON NUTRIENT QUALITY OF ORGANIC AND CONVENTIONALLY FERTILISED LETTUCE (LACTUCA SAT/VAL.)" JOURNAL OF ORGANIC SYSTEMS, vol. 5, no. 1, 30 December 2010, pages 1-37, describes the role of silica in plants with respect to the application of silicate based sprays in biodynamic agriculture.

### Summary of the invention

It is therefore one object of the present invention as defined in claim 1 to propose a method for stimulation and enhancement of processes of reduction, transformation and metabolization of inorganic salts in surface soils through treatment with enhanced rock powder, which method is aimed at overcoming all of the above-mentioned problems.

The present invention relates to a specific treatment comprising various phases and aimed at enhancing the capability of metabolic stimulation of soils and the reduction, transformation and metabolization of inorganic salt compounds in surface soils and plants in which said inorganic salt compounds are present.

More specifically, the main ingredient, which is container of the essential properties necessary for said enhancement, is a rock powder subjected to specific treatment and enhancement, which is then sprinkled on said vegetable organisms and soils until it causes an enhancement of their natural metabolic properties. The goal is to restore a natural organic balance, wherein the presence of inorganic salts is no longer an obstacle hindering the use of said vegetable organisms or soils.

The first phase of the treatment consists of preparing a composted organic substance, which is treated in a specific manner in order to increase its biological and functional stimulation properties and power.

The second phase of the treatment consists of feeding said treated and composted organic substance into a specific quantity of rock powder of a specific type, i.e. quartz-feldspatic sand.

The third phase of the treatment consists of sprinkling the rock powder enriched and treated with the composted organic substance on the organisms or soils to be treated in order to reduce, transform and metabolize the inorganic salt compounds with the intention of restoring their natural organic balance, and hence the agricultural cultivation and/or production capabilities.

The method of the invention allows activating a process of autogenous disaggregation of inorganic salt compounds, so as to reduce the measurable amount thereof to a level below a threshold beyond which the productivity of cultivated land is impaired, reduced or jeopardized. The method uses wholly natural ingredients, processes and components, and thus:
A. it stimulates the natural microbiologic balance, and hence also the autogenous capability of restoring the natural and functional balances;
B. it avoids any undesired reaction or effect of the proposed solution, thus eliminating any contraindications of one or more of the processes or ingredients previously or currently used.

The method of stimulation and enhancement according to the invention is characterized by the high capability of said treated rock powder of stimulating, sustaining and reinforcing the biological processes of a terrestrial organism, i.e. earth, soil or loam, whether cultivable or not, and allows for disaggregation and/or metabolization of inorganic salt compounds formed because of marine deposition, or barren soil, or intoxication from chemically synthesized substances, or alterations of the metabolic capacity of the soil following improperly composted organic manuring. It provides an important action of sustaining and reinforcing the natural defences of the soil, which, once stimulated by the addition of said treated rock powder, can complete the process of abating inorganic salt compounds, even until their complete elimination. Without said treated rock powder, on the contrary, a soil affected by high levels of inorganic salt compounds would not be able to limit and/or eliminate their detrimental effects on the cultures.

In particular, the object of the present invention is to provide a method for preparing a product adapted to stimulate and enhance processes of reduction, transformation and metabolization of inorganic salts in surface soils, as set out in the appended set of claims.

### Brief description of the drawings

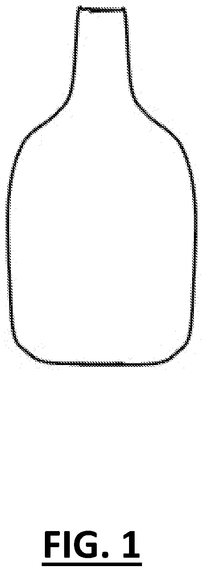

Further objects and advantages of the present invention will become apparent from the following detailed description of some preferred embodiments supplied merely by way of non-limiting example with reference to Figure 1, which illustrates an embodiment of a "carboy-shaped" vessel.

### Detailed description of some embodiments

The method of the invention provides for treating terrestrial organisms or substances (i.e. earth, loam, soil, or the like) through the application of rock powder treated and enhanced with a composted organic substance and then packaged, and comprises various phases of preparation and activity, which will be described below.

**In a first phase,** a composted, totally biologic and natural organic substance is treated in a specific manner in order to increase its biological and functional stimulation properties and power. The substance is treated as follows:
- The initial biological natural substance is bovine cow manure.
- The manure is left to mature in a deep hole dug in fertile soil with pH levels around the neutral value, preferably 6.5 to 8.0, for a preferable period of six months, which, according to the course of the seasons, shall include autumn and winter as "biological soil reinforcement" periods; therefore, the period will preferably span from October to March in the northern hemisphere and from April to September in the southern hemisphere.
- The hole is preferably dug to a depth of 100 cm for the purpose of exploiting and optimizing the processes of concentration of the vital ingredients that are present and that are subject to transformation in the terrestrial organism during said period, when vitality "concentrates" in the soil.
- At the end of the six-month period, an adequate and suitable concentration and the resulting enrichment of the vital properties of the bovine cow manure thus treated and matured will have occurred.
- This enriched organic substance is then subjected to dilution, preferably 1 to 100, with red-wine vinegar of biologic quality. In particular, the vinegar is obtained by acetic fermentation of grapes or marcs, for the purpose of exploiting the natural propensity to propagation through a liquid element.
- Said dilution occurs (according to a well-defined process as described in the next paragraph) starting from a time period of 60 seconds, followed by a pause of 180 seconds and by a second enhancement period of 60 seconds.
- This enhancement is effected by subj ecting the product, placed into a vessel as described below, to specific "succussions" (manual rhythmic shaking) at a rhythm of 72 succussions per minute for 60 seconds, followed by a pause of 180 seconds.
- The liquid substance is then diluted again in a proportion of 1 to 100 with distilled water, and then further enhanced by repeating the same rhythm, time and modes as used in the first succussion.
- The second manual succussion is repeated two more times at the same rhythm and for the same time, thus forming a total succussion and enhancement process of 4 steps.
- Preferably, in order to ensure that the best result will be attained in this phase, it is appropriate that the vessel in which all succussion operations are carried out has a "carboy" shape, so that the succussion will create a "lemniscate" (or "harmonic eight") motion within the mass. The vessel shall undergo a constant 60-degree oscillation.
- Furthermore, the proportion between the liquid mass and the air volume in the vessel is preferably ¾.
- Distilled water with traces of matured winter manure is thus obtained, which has been transformed by the process into enhanced liquid substance.

Succussion is an action that imparts strong agitation in the liquid mass contained in the vessel, determining conditions in which infinite vortices are formed in the mass due to the 60-degree oscillatory motion imparted to the mass, which motion creates forms of "harmonic eight". It is preferable to use a carboy-shaped vessel of a per se known type as illustrated in Figure 1. According to "chaos mathematics" studies, the molecules of a liquid mass put in motion in a vortex fashion move in compliance with Keplero's three laws, i.e. the laws that govern the motion of our planetary system. In this context, the product is thus placed in a resonance condition through the application of the creation and evolution laws from which all that we call "nature" was created. Hence the enhancement of its curative actions, which will then be applied/transmitted to the soil.

**In a second phase,** rock powder is treated.

The rock powder that has been selected as most suited for this purpose is of the quartz-feldspatic sand type, preferably having the following physical-chemical components:
- granulometry: 0.10mm
- humidity of less than 5%
- mineral components: quartz 25-35%; potassium feldspar 22-33%; sodium feldspar 30-40%; others 10%
- chemical analysis: pH 6.5-7; SiO₂ 70-74%; Al₂O₃ 13-15%; Fe₂O₃ 2-3%; TiO₂ 0.22-0.7%; CaO 1.2-1.6%; MgO 0.23-0.32%; K₂O 4-6%; Na₂O 3-4%.

- In order to make it more effective, the rock powder is pre-treated by feeding it into a mechanical mixer that will turn for a period of 3'43" (with a tolerance of plus or minus 10 seconds). The mixer may consist of a normal concrete mixer having a capacity of 250 litres, turning at a speed of 15 to 25 rpm.
- The mixing time varies depending on the type and pH component of the soil to be treated.

If the soil has a pH of less than 7 (acid soil), the rock powder mixing time will be 3'29", with a tolerance of plus or minus 10 seconds.

If the soil has a pH in excess of 7.2, up to approx. 9.0 (basic soil), the rock powder mixing time will be 4'43", with a tolerance of plus or minus 10 seconds.

**In a third phase,** the rock powder is mixed and amalgamated into the enhanced liquid substance.
- The rock powder thus prepared is amalgamated with the above-described organic substance (distilled water with traces of matured winter manure) that the method has transformed into enhanced liquid substance.
- Amalgamation occurs in the following proportions: 10 ml of enhanced organic substance per kg of rock powder.
- The mixing and amalgamating action is achieved by mixing the rock powder enriched with the liquid product for a period of 4'43" (with a tolerance of plus or minus 10 seconds), wherein the mixing rhythm is maintained throughout such period of time, followed by a pause for a period equal to 3 times the mixing time, and by a further mixing for a period of 4'43" (with a tolerance of plus or minus 10 seconds).
- When mixing is complete, the product thus obtained can be packaged, e.g. into sacks, and is ready for use.

The product obtained by means of the above-described method can then be used in a soil.

The product must be used as follows:
- Analysis and evaluation of the soil as concerns its biological components (organic substance content, acidity, salinity, conductivity) for the purpose of quantifying the dose of rock powder to be used. An adaptation will be necessary as a function of the cultivation techniques in use on the selected soil, e.g. conventional, eco-compatible, biodynamic, etc. The soil will then have to be analyzed in order to establish, for example, the content of inorganic salt compounds.
- Final dilution of the rock powder, in a dose of 1-2 kg for 200-250 litres of drinkable water for each hectare of soil to be treated, based on the above-described biological variables: organic substance content, acidity, salinity, conductivity.
- Spraying the selected soil(s), preferably by sprinkling, or by using other common spraying methods, such as the one known as "fine-drop spraying".

After the application of the above-defined product, the content of inorganic salt compounds in the soil will decrease to 50% within two months and to 80% within three months.

In the case of eco-compatible agriculture, the effect can be considered to remain stable over time. In the case of conventional agriculture, i.e. an agricultural practice that makes use of synthesized chemical substances or fertilization through non-composted organic substances, the effect may last no longer than one year.

In order to improve the capability of action of the original product described above as a first variant, it can be enriched with some components suitable for overcoming some factors that may limit its properties, such as the variable environmental, climatic, meteorologic and agronomic conditions that are typical of some climatic regions where the product may have to be applied.

To this end, the previously described product can be integrated as follows.

Components can be added for stimulating the organic activity in the soil and in the plant, as well as metabolization of any added chemically synthesized substances (e.g. fertilizers, pesticides, herbicides), even when the pH of the soil is lower than 7.2, since these are factors that may inhibit the action of the method upon the product.

In order to overcome such adversities, further components are added as depolluting and re-equilibrating agents, which are composed as follows:
- 12 parts of cow manure left to mature underground from October to April in a hole dug to a depth of 120 cm in weakly calcareous soil and then diluted 1 to 100 in distilled water and subjected to rhythmic succussion under "harmonic eight" motion for 2 minutes and 24 seconds. This succussion is then repeated in the same manner 7 min and 12 sec after the first one. This whole operation (dilution of the result of the first dilution/succussion in additional distilled water in a proportion of 1 to 100 and succussion) is repeated two more times, for a total of 3 times.
- 6 parts of sidereal iron diluted 1 to 100 in distilled water and subjected to rhythmic succussion under "harmonic eight" motion for a time of 25 seconds and then for additional 48 seconds. This whole operation (dilution of the result of the first dilution/succussion in additional distilled water in a proportion of 1 to 100 and succussion) is repeated two more times, for a total of 3 times.

These additional components are inserted into the original product as described in the first variant in a dose of 10% of the original product, and constitute an integrator for the agronomic conditions that may reduce the action of the original product, such as:
a) content of organic substance of less than 1.5%, use of synthetic fertilizers (especially nitrogenous ones),
b) use of synthetic substances against pathologies, parasites and infesting plants;
c) pH value lower than 7.2.

Other components can be added to the original product in order to re-equilibrate the environmental and climatological conditions in case of unfavourable conditions, so as to assist or reinforce the action exerted by the method on the product, even in the presence of variable or extremely adverse environmental conditions.

In order to overcome such adversities, further components are inserted into the original product as environmental re-harmonizers and stimulators of resistance to said inhibition factors in the soil/plant complex. Such components are composed as follows:
- 6 parts of red-wine vinegar diluted 1 to 100 in distilled water and subjected to rhythmic succussion under "harmonic eight" motion for 1 minute and 24 seconds. This succussion is then repeated in the same manner 4 min and 12 sec after the first one. This whole operation (dilution of the result of the first dilution/succussion in additional distilled water in a proportion of 1 to 100 and succussion) is repeated two more times, for a total of 3 times.
- 2 parts of fishbone calcium extracted by boiling for 30 minutes in distilled water. The result of this operation is diluted 1 to 100 in distilled water and subjected to rhythmic succussion under "harmonic eight" motion for 3 minutes and 20 seconds. This succussion is then repeated in the same manner 13 min after the first one. This whole operation (dilution of the result of the first dilution/succussion in additional distilled water in a proportion of 1 to 100 and succussion) is repeated 3 more times, for a total of 4 times.
- 6 parts of "Robur" oak bark diluted 1 to 100 in distilled water and subjected to rhythmic succussion under "harmonic eight" motion for 18 seconds. This succussion is then repeated in the same manner 54 sec after the first one. This whole operation (dilution of the result of the first dilution/succussion in additional distilled water in a proportion of 1 to 100 and succussion) is repeated two more times, for a total of 3 times.

Also these additional components are inserted into the original product in a dose of 10% of the original product, and constitute an integrator aimed at overcoming any reduction in the action of the method filed for patent protection, that may be caused by adverse environmental conditions, which can be described as follows:
a) poor water supply to the soil because of low atmospheric precipitation or low capacity of external supply by irrigation;
b) excessive soil temperature, which further reduces the water content in the soil and subjects the plants to stress conditions.

The liquid product obtained from mixing the original product with the additional components is mixed with SF100 white rock powder in a proportion of 1.66 ml of resulting product in 20 kg of rock powder.

As far as use is concerned, the product thus obtained is diluted in a dose of 100 g for 200/250 litres of good-quality water in order to sprinkle 1 hectare of surface.

Two distinct results can be obtained by means of the additional variants described herein:
1. stabilization of the method in adverse and/or extreme climatic or environmental conditions, different from the conditions on which the original method filed for patent protection was based, which was essentially conceived for Europe;
2. higher rate of reduction of saline components, equal to or greater than the levels declared in the patent application by 50% within two months and by 80% within three months, and equal to or greater than the 55% level obtained in China in 2014.

The effect on the soil will remain stable, if eco-compatible cultivation methods are used.

Otherwise, it is preferable to repeat the intervention every year.

The additional components described above as general depolluting and re-equilibrating agents, as well as the additional components described above as environmental re-harmonizers and stimulators can be added to the original product either in combination or as alternatives, depending on the type of intended use.

From the above description, those skilled in the art will be able to produce the object of the invention without introducing any further construction details.

## Claims

1. Method for preparing a product adapted to stimulate and enhance processes of reduction, transformation and metabolization of inorganic salts in surface soils, the method comprising the following phases:
- a first phase, wherein:
a natural biologic substance is prepared, which comprises bovine cow manure;
said substance is placed into a hole in the soil, with pH levels around the neutral value, preferably 6.5 to 8.0, for a preferable period of six months, from the beginning of autumn throughout the winter, thereby obtaining an enriched organic substance;
said enriched organic substance is then subjected to dilution, preferably 1 to 100, with red-wine vinegar of biologic quality, and is placed into a vessel subjected to succussion, starting with a period of 60 seconds followed by a pause of 180 seconds and by a second period of 60 seconds,
said enriched organic substance is then diluted again in the proportion of 1 to 100 with distilled water, this dilution being then repeated as in the previous step,
the previous step of dilution is then repeated two more times, forming a total succussion and enhancement process of four steps, thereby obtaining distilled water with traces of said manure;
- a second phase, wherein:
rock powder of the quartz-feldspatic sand type is prepared,
said rock powder is then pre-treated by feeding it into a mechanical mixer that will turn for a period of 3'43", with a tolerance of plus or minus ten seconds, said period changing according to the type of soil and to the pH component of the soil to be treated:
• if the pH of the soil is lower than 7, said period of mixing the rock powder in the mechanical mixer is 3'29", with a tolerance of plus or minus 10 seconds;
• if the pH of the soil is higher than 7.2, up to approx. 9.0, said period of mixing the rock powder in the mechanical mixer is 4'43", with a tolerance of plus or minus 10 seconds;
thereby obtaining pre-treated rock powder;
- a third phase, wherein:
said pre-treated rock powder is amalgamated with said distilled water with traces of said manure, in the proportion of 10 ml of distilled water with traces of said manure for each kg of pre-treated rock powder, for a period of 4' 43", with a tolerance of plus or minus 10 seconds, followed by a pause for a period equal to three times the mixing time, and by a further mixing for a period of 4'43", with a tolerance of plus or minus 10 seconds, thereby obtaining said product adapted to stimulate and enhance.

2. Method according to claim 1, wherein said hole in the soil is dug to a depth of 100 cm.

3. Method according to claim 1, wherein said succussion comprises agitation in a carboy-shaped vessel, with a 60° oscillatory motion.

4. Method according to claim 1, wherein said mechanical mixer consists of a concrete mixer having a capacity of 250 litres, turning at a speed of 15 to 25 rpm.

## Patentansprüche

1. Verfahren zur Herstellung eines Produkts, das dazu geeignet ist, Prozesse der Reduktion, Transformation und Verstoffwechselung von anorganischen Salzen in oberflächlichen Böden zu stimulieren und zu verbessern, wobei das Verfahren die folgenden Phasen umfasst:
- eine erste Phase, in welcher:
eine natürliche biologische Substanz hergestellt wird, die Rinderdung umfasst;
die Substanz in ein Loch in dem Boden platziert wird, mit pH-Niveaus um den neutralen Wert, vorzugsweise 6,5 bis 8,0, für eine bevorzugte Periode von sechs Monaten, ab Herbstbeginn durch den Winter, wodurch eine angereicherte organische Substanz erhalten wird;
die angereicherte organische Substanz anschließend einer Verdünnung unterzogen wird, vorzugsweise 1 zu 100, mit Rotweinessig biologischer Qualität, und in ein Gefäß platziert wird, das verschüttelt wird, beginnend mit einer Periode von 60 Sekunden, gefolgt von einer Pause von 180 Sekunden und über eine zweite Periode von 60 Sekunden,
die angereicherte organische Substanz anschließend erneut in dem Verhältnis von 1 zu 100 mit destilliertem Wasser verdünnt wird, wobei diese Verdünnung anschließend wie im vorhergehenden Schritt wiederholt wird,
der vorhergehende Schritt der Verdünnung anschließend noch zweimal wiederholt wird, was einen gesamten Verschüttelungs- und Verbesserungsprozess von vier Schritten bildet, wodurch destilliertes Wasser mit Spuren des Dungs erhalten wird;
- eine zweite Phase, in welcher:
Gesteinsmehl vom Quarz-Feldspat-Sandtyp hergestellt wird,
das Gesteinsmehl anschließend vorbehandelt wird, indem es in einen mechanischen Mischer eingespeist wird, der sich für eine Periode von 3'43" mit einer Toleranz von plus oder minus zehn Sekunden dreht, wobei sich die Periode je nach Bodentyp und der pH-Komponente des zu behandelnden Bodens ändert:
• wenn der pH des Bodens niedriger als 7 ist, beträgt die Periode des Mischens des Gesteinsmehls in dem mechanischen Mischer 3'29", mit einer Toleranz von plus oder minus 10 Sekunden;
• wenn der pH des Bodens höher als 7,2, bis zu etwa 9,0, beträgt die Periode des Mischens des Gesteinsmehls in dem mechanischen Mischer 4'43", mit einer Toleranz von plus oder minus 10 Sekunden;
wodurch vorbehandeltes Gesteinsmehl erhalten wird;
- eine dritte Phase, in welcher:
das vorbehandelte Gesteinsmehl mit dem destillierten Wasser mit Spuren des Dungs amalgamiert wird, in dem Verhältnis von 10 ml des destillierten Wassers mit Spuren des Dungs je kg vorbehandeltes Gesteinsmehl, für eine Periode von 4'43" mit einer Toleranz von plus oder minus 10 Sekunden, gefolgt von einer Pause für eine Periode gleich dreimal der Mischzeit, und durch ein weiteres Mischen für eine Periode von 4'43" mit einer Toleranz von plus oder minus 10 Sekunden, wodurch das Produkt erhalten wird, das zur Stimulation und Verbesserung geeignet ist.

2. Verfahren nach Anspruch 1, wobei das Loch in dem Boden auf eine Tiefe von 100 cm ausgehoben wird.

3. Verfahren nach Anspruch 1, wobei die Verschüttelung die Umwälzung in einem glasballonförmigen Gefäß mit einer Oszillationsbewegung von 60° umfasst.

4. Verfahren nach Anspruch 1, wobei der mechanische Mischer aus einem Betonmischer mit einer Kapazität von 250 Litern besteht, der sich mit einer Geschwindigkeit von 15 bis 25 U/min dreht.

## Revendications

1. Procédé de préparation d'un produit adapté pour stimuler et améliorer des processus de réduction, de transformation et de métabolisation de sels inorganiques dans des sols de surface, le procédé comprenant les phases suivantes :
- une première phase, dans laquelle :
une substance biologique naturelle est préparée, qui comprend du fumier de bovin ;
ladite substance est placée dans un trou dans le sol, avec des niveaux de pH autour de la valeur neutre, de préférence de 6,5 à 8,0, pendant une période préférable de six mois,
du début de l'automne tout au long de l'hiver, en obtenant ainsi une substance organique enrichie ;
ladite substance organique enrichie est ensuite soumise à une dilution, de préférence de 1 à 100, avec du vinaigre de vin rouge de qualité biologique, et est placée dans un récipient soumis à succussion, en commençant par une période de 60 secondes suivie d'une pause de 180 secondes et d'une deuxième période de 60 secondes,
ladite substance organique enrichie est ensuite diluée à nouveau selon la proportion de 1 à 100 avec de l'eau distillée, cette dilution étant ensuite répétée comme à l'étape précédente,
l'étape précédente de dilution étant alors répétée deux fois de plus, en formant un processus total de succussion et d'amélioration constitué de quatre étapes, en obtenant ainsi de l'eau distillée ayant des traces dudit fumier ;
- une deuxième phase, dans laquelle :
de la poudre de roche du type sable quartzo-feldspathique est préparée,
ladite poudre de roche est ensuite prétraitée en l'introduisant dans un malaxeur mécanique qui va tourner pendant une période de 3'43", avec une tolérance de plus ou
moins dix secondes, ladite période changeant en fonction du type de sol et de la composante pH du sol à traiter :
• si le pH du sol est inférieur à 7, ladite période de malaxage de la poudre de roche dans le malaxeur mécanique est de 3'29", avec une tolérance de plus ou moins 10 secondes ;
• • si le pH du sol est supérieur à 7,2, jusqu'à environ 9,0, ladite période de malaxage de la poudre de roche dans le malaxeur mécanique est de 4'43", avec une tolérance de plus ou moins 10 secondes ;
en obtenant ainsi de la poudre de roche prétraitée ;
- une troisième phase, dans laquelle :
ladite poudre de roche prétraitée est amalgamée avec ladite eau distillée ayant des traces dudit fumier, selon la proportion de 10 ml d'eau distillée ayant des traces dudit fumier pour chaque kg de poudre de roche prétraitée, pendant une période de 4'43",
avec une tolérance de plus ou moins 10 secondes, suivie d'une pause pendant une période égale à trois fois le temps de malaxage, et d'un malaxage supplémentaire pendant une période de 4'43", avec une tolérance de plus ou moins 10 secondes, en obtenant ainsi ledit produit adapté à une stimulation et une amélioration.

2. Procédé selon la revendication 1, dans lequel ledit trou dans le sol est creusé jusqu' à une profondeur de 100 cm.

3. Procédé selon la revendication 1, dans lequel ladite succussion comprend une agitation dans un récipient en forme de bonbonne, avec un mouvement oscillatoire de 60°.

4. Procédé selon la revendication 1, dans lequel ledit malaxeur mécanique consiste en un malaxeur à béton d'une capacité de 250 litres, tournant à une vitesse de 15 à 25 tours/min.
